# EUROPEAN PATENT APPLICATION

(11) **EP 2 339 525 A1**
(43) Date of publication of application: **29.06.2011**
(21) Application number: 10193097.2
(22) Date of filing: 30.11.2010
(51) Int. Cl.: G06Q 30/00, G06F 17/30

(54) **System and method for identifying data fields for remote address cleansing**

(30) Priority: 11.12.2009 US 635772
(71) Applicant: Pitney Bowes Inc., Stamford, CT 06926-0700 (US)
(72) Inventor: Pasquariello, Charles, Wallingford, CT 06492 (US); Golos, Vladimir, Shelton, CT 06484 (US)
(74) Representative: HOFFMANN EITLE

(57) **Abstract**

A system and method for identifying data fields for remote address cleansing, whereby a plurality of address file hash values are stored (52) and associated with a plurality of known address data file profiles. An uploaded address file (50) is received at the processing site from a sender who wishes to have his address list processed. A received address data file profile is identified for the uploaded address file. A first hash value is calculated (51) based on the identified received address data file profile. The first hash value is compared (53) with the stored plurality of address file hash values. If the first hash value matches one of the stored plurality of hash values, then the known address data profile of the matching stored hash value is associated (54) with the uploaded address file. If the first hash value does not match any of the stored plurality of hash values, then the steps of preparing a new address file profile, generating a new hash of the new profile, and storing (58) the new profile along with the associated new hash, are performed.

## Description

There are a number of reasons for wanting to ensure that mailing lists are as accurate as possible. First, a mailer wishes to make sure that the mail reaches the intended recipient so that the intended communication can be delivered. The mailer's expense of preparing a mail piece and the postage costs are wasted when a faulty address prevents delivery. Further, the Postal Service incurs additional expenses in processing and returning undeliverable mail. Thus, it is in the interest of mailers and the Postal Service (or other delivery service) to ensure that mailing lists are as accurate as possible.

There are several steps that can be taken to ensure that mailing lists are accurate and up-to-date. Mailers can apply address hygiene software to their lists to ensure that individual addresses are in proper, postal approved, format. If non-standard abbreviations or address components are used, then postal automation devices may not be able to interpret the information for sorting. Hygiene software can also add four digit zip code extensions to facilitate postal processing. Data is available to validate that a particular address is actually on the master list of addresses to which the Postal Service can deliver. Other data and software are available to incorporate the latest recipient move updates, as provided to the Postal Service, and to incorporate the latest information on undeliverable mail from previous mailings.

Data and application software for these processes to update and correct mailing lists are typically copied onto CD's and sent to mailers via a software subscription business model. In some cases, it is also known upload mailing lists to a remote computer that can also provide address list correction using a service based model.

The present invention enhances the service based model of providing remote address cleansing. In this model, mailers are able to upload their address lists to a remote computer and to select what services they want performed on the list. The remote computer processes the lists, and a corrected list is downloaded back to the mailer.

One difficulty with this model is that the format of data and the content of the data being sent by mailers can vary greatly. The remote computer needs to be able to recognize what it is receiving in order to perform the correct processing. Mailers may be required to identify or verify the nature of the data that they are sending. The present invention simplifies that process and adds additional intelligence to assist the mailer in verifying the profile of the data that they are sending. An alternative approach not contemplated within the scope of the invention would require the mailers to pre-process their lists to conform to a uniform format. The pre-formatting approach does not allow the flexibility and convenience achieved using the present invention.

A plurality of address file hash values are stored and associated with a plurality of known address data file profiles. An uploaded address file is received at the processing site from a sender who wishes to have his address list processed. A received address data file profile is identified for the uploaded address file. A first hash value is calculated based on the identified received address data file profile. The first hash value is compared with the stored plurality of address file hash values. If the first hash value matches one of the stored plurality of hash values, then the known address data profile of the matching stored hash value is associated with the uploaded address file. If the first hash value does not match any of the stored plurality of hash values, then a new address file profile is prepared, a new hash is generated of the new profile, and the new profile is stored along with the associated new hash.

Address data profiles may be comprised of address data file formats and data field structure. The "format" of the data file refers to the type of database and tables that the sender uses, and the overall structure in which the data is stored. "Data field structure" refers to the particular characteristics of data stored in the various columns of the database. For example, the fact that a first column is an integer with a maximum length of 6 characters and the second column is text with a maximum length of 20 characters are examples of data field structures. The step of identifying the received address data file profile may include identifying a received address data file format and received data field structure. The step of calculating the first hash value may include calculating based on the received address data file format and received data field structure.

In some embodiments of the invention, the sender can be queried to confirm that certain data fields are being properly interpreted. Such embodiments may also include the ability to automatically analyze characteristics of data in data fields to determine if the data can be recognized as pertaining to a known type of address data field. The data fields are automatically identified based on the analyzed characteristics. The sender may then be queried as to whether they agree with the automatically identified data fields.

Once all of the data fields are properly identified using the invention, the system can proceed with providing services such as address verification and cleansing on the uploaded address file. The calculated hash for a particular data file may also incorporate the type of service to be performed, since the ability to reuse previously identified profiles might depend on whether those profiles are applicable to different services.

When a sender decides that a previously defined address data file profile needs to be changed, the updated information can be entered and a new hash value can be recalculated and stored for future use.

The accompanying drawings, which are incorporated in and constitute a part of the specification, illustrate presently preferred embodiments of the invention, and together with the general description given above and the detailed description of the preferred embodiments given below, serve to explain the principles of the invention.
Fig. 1 shows the operation of an on-line address processing system.
Fig. 2 shows an exemplary interface for matching fields in an on-line address processing system.
Fig. 3 shows an exemplary interface for matching fields in an on-line address processing system, including a preview tool for assisting in verification of identified data fields.
Fig. 4 shows an exemplary interface for matching fields in an on-line address processing system, including a browsing interface for identifying data fields.
Fig. 5 shows an exemplary flow diagram of a process for matching an address file with a known profile.
Fig. 6 depicts a flow for calculating a hash value.
Fig. 7 depicts an exemplary message for a successful address file profile match.

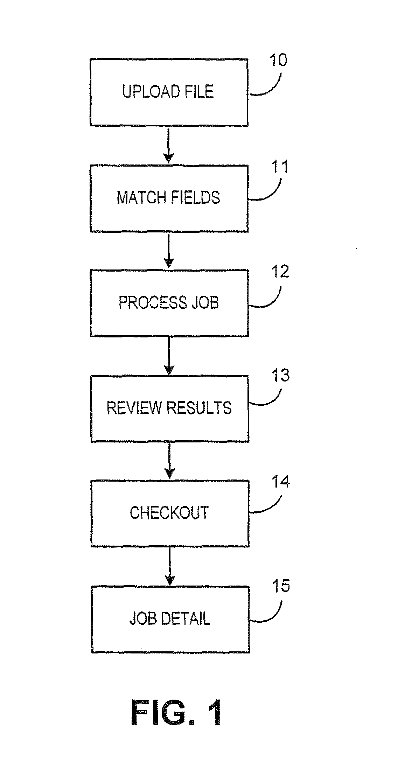

Fig. 1 is a flow diagram of the basic steps taken in providing a remote address list processing service. At step 10, the mailer uploads an electronic version of the address list from the mailer's computer to the service's computer. Transmittal of data takes place over known computer networks, including over the Internet, as in the preferred embodiment. The format of the data will vary from mailer to mailer, and is organized in tables as are commonly used in connection with known database programs. The tables include a variety of data fields, for example name, street number, street name, city, state, zip, etc. Different mailers will have different fields, and similar fields in different order, depending on their own internal processes. Each address record includes information in the various fields. Mailers' address lists may also include information that is not pertinent to address correction, for example a customer number.

The field matching step 11 addresses the problem of varying data types and formats of different mailers, as described above. In this step, the various fields in the data tables are identified, so that the appropriate processing can be applied to those fields for address correction. The enhancement described herein allows that a variety of formats can be submitted to the address correction service, and that the sender of the data can be relieved of some of the burden of making sure that fields are properly identified by the service for processing.

At step 12, the processing job is performed on the uploaded data and a corrected data file is generated. The results can be reviewed by the mailer at step 13. At the checkout step 14, the corrected data file is downloaded back to the mailer, and the transaction is finalized by providing a job detail report (step 15).

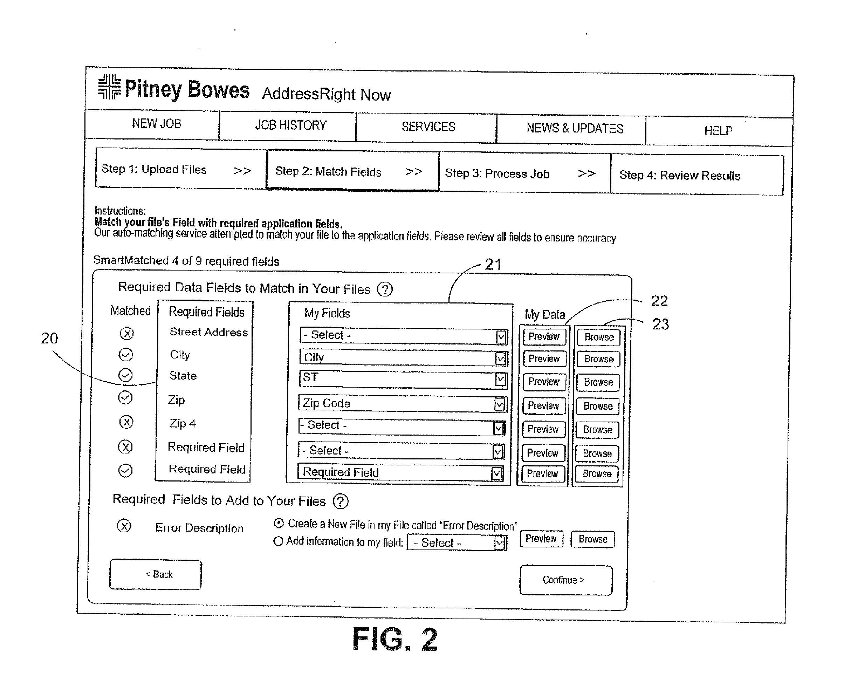

Fig. 2 depicts a user interface for a mailer to identify data fields in their address list file. Column 20 shows an exemplary list of fields required to perform the desired processing on the address file. Interface block 21 depicts fields in the mailers data. Some of the mailer's fields in block 21 have been identified by the system (e.g. "City," "ST," "Zip Code") and others require additional input (e.g. fields corresponding to "Street Address" and "Zip 4"). For each required field, a preview button 22 and a browse button 23 are provided to assist the mailer in identifying and verifying which of their data fields correspond to the required fields 20.

The uploading process may also include steps for analyzing the mailer's file data to try to make an educated guess as to what category of information is in a given field. This process is referred to as automatic field identification. For example, a field can be compared against a list cities, a list of states and state abbreviations, or a list of words like "road," "street," or "drive," to determine whether the information in that field appears to match one of the required fields. If the data field appears to match one of the required categories, then it can be tentatively identified as such, pending user verification, as depicted in Fig. 2.

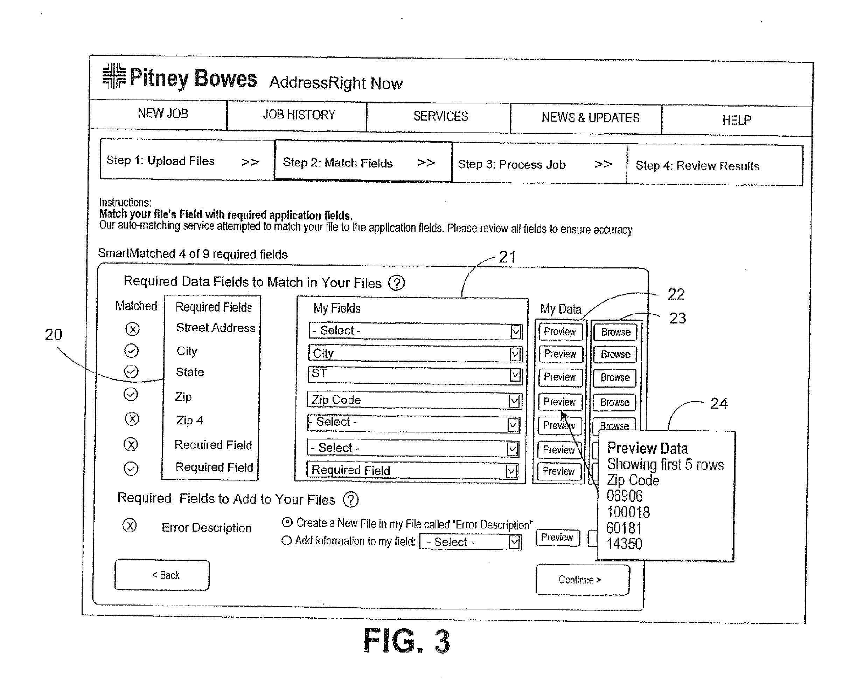

As seen in Fig. 3, clicking on the preview button 22 provides a view 24, that displays the data in the mailer's field. The mailer can inspect that data to confirm that it has been correctly matched to one of the required fields. In this case, the mailer can confirm that the displayed data from the mailer's file appears to be zip codes, as shown in the preview data 24 showing the first five rows of a selected field in the mailer's data.

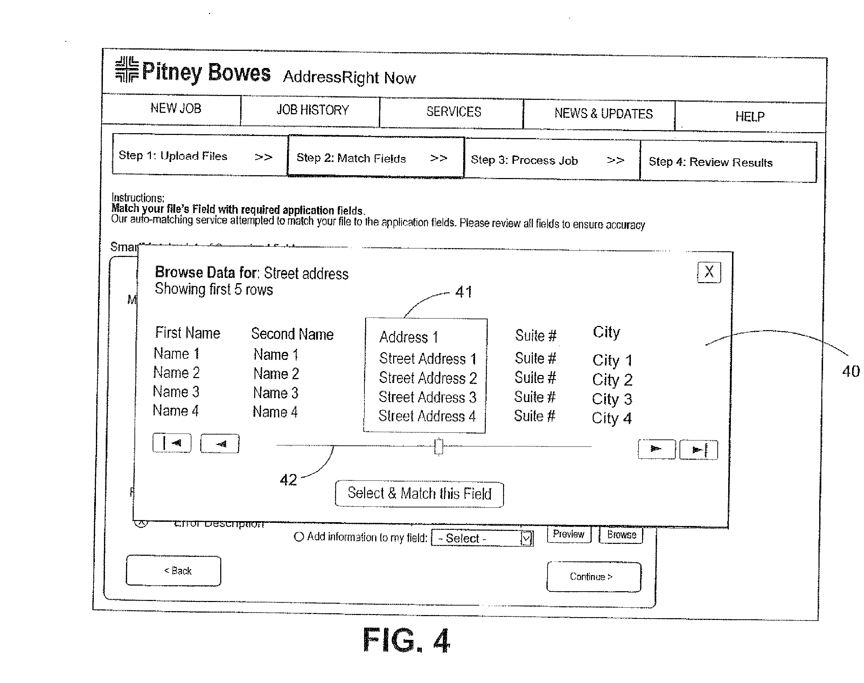

The functionality of the "Browse" button 23 is further depicted in Fig. 4, When the "Browse" button 23 is selected a field browsing display 40 appears. Various fields 41 can be viewed and manually selected to correspond with one of the required fields. A scroll bar 42 is provided to allow navigation through the display of data fields. In the example of Fig. 4, the required "Street address" field is being matched with a field 41 in the mailer's data. In the mailer's data the field was called "Address 1," and the mailer can verify that this is the mailing address to be verified, and not some other information.

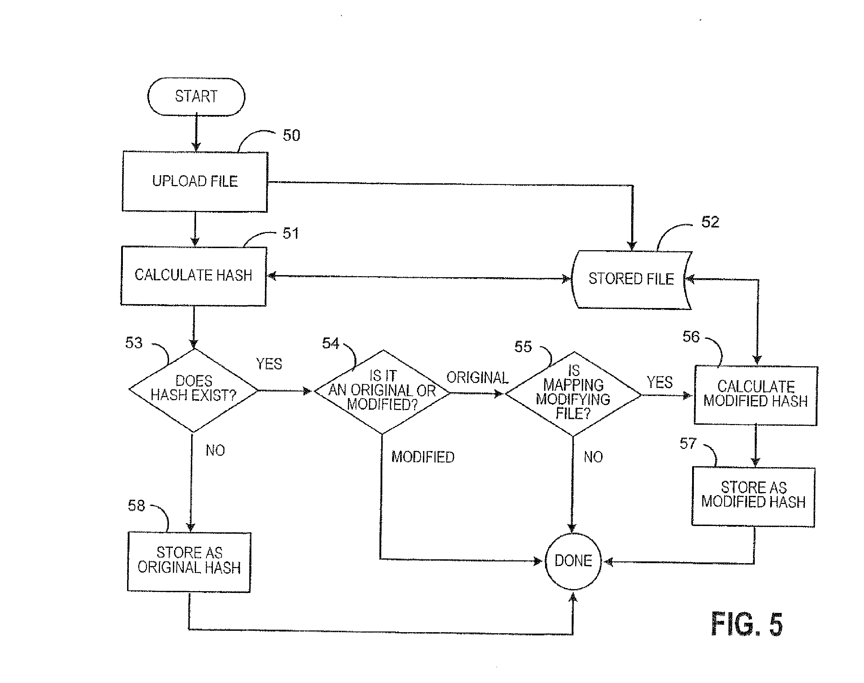

Fig. 5 depicts an exemplary flow diagram of the enhanced functionality that provides for automatic recognition of a profile of an address data file. If a mailer uses data having the same profile as a prior job, then the system will automatically recognize the correct fields, and the need for manual investigation and verification, as depicted in Figs. 2-4, is minimized. When a profile of an uploaded address data file is recognized, all of the mailer's data fields can be automatically mapped to one of the required fields in accordance with previously determined and stored information. A profile for an address data file may refer to (1) the database format; (2) the names of the fields; and/or (3) characteristics of the fields. Characteristics of the fields refers to properties such as whether a particular field includes text, numbers, and a field length.

In operation, the process begins with uploading a file for processing at step 50. A hash is calculated at step 51 based on the profile of the uploaded file. The input for the hash algorithm may be the database format of the file, field identifications, number of fields, and field properties of the fields. Any known hash algorithms can be applied, the only criteria being that there should be a very low probability that any two different address file profiles will result in the same hash. The more data that is input into the hash algorithm, the less likely it will be that there will be a false match. Accordingly, mail file profiles should include as many details about the data fields as possible. An advantage of hash algorithms is that any difference in the input profile will result in a completely different and unique hash number being output. The calculated hash is stored in a stored file 52 with the uploaded file.

At step 53, it is determined whether the calculated hash from step 51 matches any hashes that have been calculated and stored from previous jobs. Hashes from previous jobs are stored in association with their corresponding data file profiles. If there is no match, then the new hash and the profile of the new uploaded file are stored in the system (step 58) for future comparison. If an existing match is found for the calculated hash, then the profile for the preexisting match can be applied to the new file, and the mailer's fields corresponding to the system required fields are automatically identified, with little or no input from the mailer.

The system also provides that modified hashes can be calculated based on additional mapping done by the mailer to further refine and correct the identification of fields. At step 54, if it is determined that the preexisting hash is a modified hash, then it is known that the mailer has provided the additional mapping, and no further action needs to be taken. If the matching hash is an original hash, then step 55 checks to see if there is any additional mapping by the mailer to modify the file. If there is no additional mapping, then the process is done. If additional mapping is done, then a modified hash is calculated at step 56, using the same hashing algorithm, and the modified hash is stored with the associated mapping profile (step 57), before the process is finished.

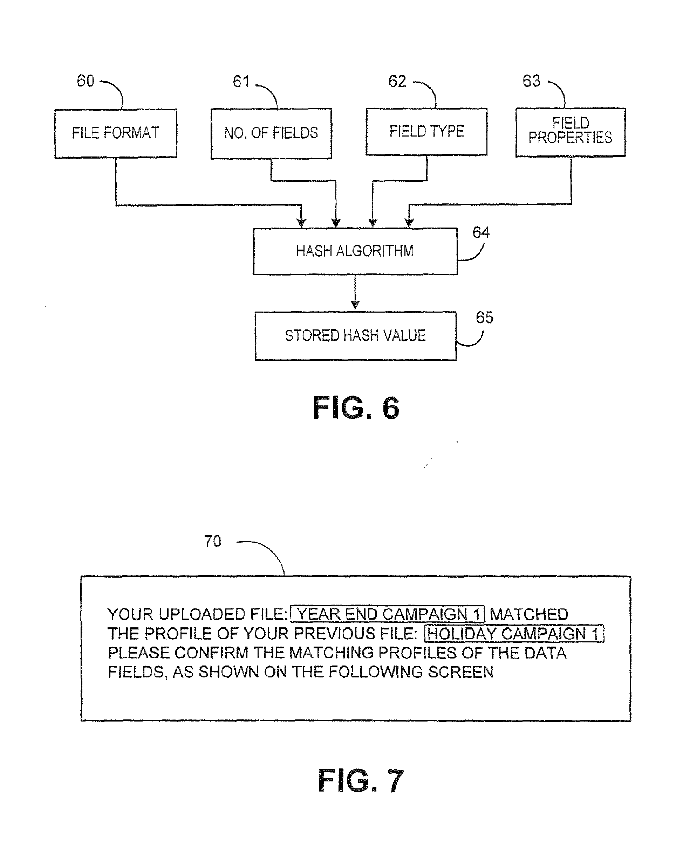

Fig. 6 shows exemplary profile components (60-63) of an uploaded address data file that can be used to generate a corresponding hash. A first component might be the file format 60 of the data, for example whether it was created using an Microsoft SQL, Oracle, or other known database program. Another component would be the number of fields 61 found in the uploaded data file. The type of field 62 for each data field can be another component. For example, field type 62 could be whether each field is text, numbers, dates, etc. Field properties 63 identify more specific features of the data fields, for example how many characters are allowed in the field.

Another exemplary profile component could be an identification of the address correction services to be done on the file. For example, different services might have different required fields. If a mapping for a previous job did not require matching of a particular field, it may be desired to do a more intensive manual matching before relying on an automated one.

The profile components 60-63 are input into a hash algorithm which outputs a unique value. That unique value is stored as a stored hash value 65 in association with the mapping of the data fields to the required fields for successful address correction processing.

Fig. 7 depicts an exemplary notification provided to the mailer when the hash calculated for an uploaded file matches an existing file. In this example, the hash for the uploaded file "YEAR END CAMPAIGN 1" matches a previously processed file called "HOLIDAY CAMPAIGN 1." The mailer then has the option to confirm that the two files have the same profile for purposes of address correction processing.

While the present invention has been described in connection with what is presently considered to be the most practical and preferred embodiments, it is to be understood that the invention is not limited to the disclosed embodiment, but, on the contrary, is intended to cover various modifications and equivalent arrangements included within the spirit and scope of the appended claims.

## Claims

1. A method of processing data fields for address cleansing, the method comprising:
storing (58) a plurality of address file hash values associated with a plurality of known address data file profile;
receiving (50) an uploaded address file;
identifying a received address data file profile of the uploaded address file;
calculating (51) a first hash value based on the identified received address data file profile;
comparing (53) the first hash value with the stored plurality of address file hash values; and
if the first hash value matches one of the stored plurality of hash values, then associating (54) the known address data profile of the matching stored hash value with the uploaded address file;
if the first hash value does not match any of the stored plurality of hash values, then preparing (58) a new address file profile, generating a new hash of the new profile, and storing (58) the new profile along with the associated new hash.

2. The method of claim 1 wherein address data profiles are comprised of address data file formats (60) and data field structure (61); and wherein
the step of identifying the received address data file profile includes identifying a received address data file format and received data field structure; and
the step of calculating (51) the first hash value includes calculating based on the received address data file format and received data field structure.

3. The method of claim 2 wherein the step of calculating (51) hash values further includes calculating based on a quantity of fields in the data file, data types in the fields in the data file, and data field properties.

4. The method of claim 1, 2 or 3 wherein the step of identifying the received address data file profile includes querying a sender of the received address data to identify characteristics of the received address data file.

5. The method of any preceding claim wherein the step of identifying the received address data file profile includes automatedly analyzing characteristics of data in data fields to determine if the data can be recognized as pertaining to a known type of address data field, and automatically identifying the data fields based on the analyzed characteristics.

6. The method of any preceding claim further including performing address verification and cleansing on the uploaded address file in accordance with the associated known address data profile.

7. The method of any preceding claim wherein there are a plurality of services that can be performed on the uploaded address file and the step of calculating (51) the first hash value and the step of generating the new hash include incorporating a value for a particular service, or set of services, that are to be performed.

8. The method of any preceding claim including, subsequent to associating the known address data profile of the matching stored hash value with the uploaded address file, a step of receiving further modifications to the known address data profile from a sender and generating (56) a modified hash of the modified profile, and storing (57) the modified profile along with the associated modified hash.

9. A computer system for processing data fields for address cleansing, the system comprising one or more computer servers including a processor programmed for performing the following steps:
storing (52) a plurality of address file hash values associated with a plurality of known address data file profiles in a database memory;
receiving (50) an uploaded address file from a sender over a communication network;
identifying a received address data file profile of the uploaded address file;
calculating (51) a first hash value based on the identified received address data file profile;
comparing (53) the first hash value with the stored plurality of address file hash values;
if the first hash value matches one of the stored plurality of hash values, then associating (54) the known address data profile of the matching stored hash value with the uploaded address file; and
if the first hash value does not match any of the stored plurality of hash values, then preparing a new address file profile, generating a new hash of the new profile, and storing (58) the new profile along with the associated new hash.

10. The system of claim 9 wherein address data profiles are comprised of address data file formats (60) and data field structure (61); and wherein the processor is further programmed such that:
the step of identifying the received address data file profile includes identifying a received address data file format and received data field structure; and
the step of calculating (51) the first hash value includes calculating based on the received address data file format and received data field structure.

11. The system of claim 9 or 10 wherein the processor is further programmed such that the steps of calculating (51) hash values further include calculating based on a quantity of fields in the data file, data types in the fields in the data file, and data field properties.

12. The system of claim 9, 10 or 11 wherein the processor is further programmed such that the step of identifying the received address data file profile includes querying the sender of the received address data to identify characteristics of the received address data file.

13. The system of claim 9, 10, 11 or 12 wherein the processor is further programmed such that the step of identifying the received address data file profile includes automatedly analyzing characteristics of data in data fields to determine if the data can be recognized as pertaining to a known type of address data field, and automatically identifying the data fields based on the analyzed characteristics.

14. The system of any of claims 9 to 13 wherein the processor is further programmed to include a step of performing address verification and cleansing on the uploaded address file in accordance with the associated known address data profile.

15. The system of any of claims 9 to 14 wherein there are a plurality of services that can be performed on the uploaded address file and the processor is further programmed such that the step of calculating (51) the first hash value and the step of generating (56) the new hash include incorporating a value for a particular service, or set of services, that are to be performed.
